# EUROPEAN PATENT SPECIFICATION

(11) **EP 3 772 663 B1**
(45) Date of publication and mention of the grant of the patent: **12.01.2022**
(21) Application number: 19191043.9
(22) Date of filing: 09.08.2019
(51) Int. Cl.: G01S 13/00, G01S 15/00, G01S 17/00, G01S 17/89, G01S 15/86, G01S 13/86

(54) **A SYSTEM FOR DETECTING PLASTICS, MACRO-PLASTICS, MICRO-PLASTICS AND NANO-PLASTICS IN A MARITIME, ESTUARY OR RIVER ENVIRONMENT**
SYSTEM ZUM ERKENNEN VON KUNSTSTOFFEN, MAKROKUNSTSTOFFEN, MIKROKUNSTSTOFFEN UND NANOKUNSTSTOFFEN IN EINER MARITIMEN, MÜNDUNGS- ODER FLUSSUMGEBUNG
SYSTÈME DE DÉTECTION DE MATIÈRES PLASTIQUES, MACROPLASTIQUES, MICROPLASTIQUES ET NANOPLASTIQUES DANS UN ENVIRONNEMENT MARITIME, ESTUARIEN OU FLUVIAL

(43) Date of publication of application: 10.02.2021
(73) Proprietor: Ladar Limited, PO Box 14052, The Valley (AI)
(72) Inventor: DOKKEN, Sverre, 98000 Monaco (MC); HJELMSTAD, Jens, 2000 Lillestrom (NO); MICHAEL, Alexis, 3111 Limassol (CY); MACHADO DOS SANTOS PINTO, Carlos Eduardo, 2705-735 Assafora, São João das Lampas (PT); SCHMUCK, Siegfried, 1070 Anderlecht (BE)
(74) Representative: Patentship Patentanwaltsgesellschaft mbH

(56) References cited:
- EP-A1- 2 866 052
- US-A1- 2005 007 448
- US-A1- 2013 070 556

## Description

### TECHNICAL FIELD

The present invention relates to the field of detection and classification of floating plastics, macro-plastics, micro-plastics and nano-plastics in water.

### BACKGROUND

Increasing quantities of plastics, macro-plastics, micro-plastics and nano-plastics floating or dispensed within water, such as in maritime, estuary or river environments pose an increasing challenge for the environment.

The detection and classification of these different plastics is of particular relevance for facilitating clean-up operations in the environment. However, common techniques allow only for a coarse detection and classifications of these different plastics.

Document US 2005/007448 A1 relates to a remote 3-D imaging system which uses an illumination source to establish the relationship of the image features to the system, which is displayed by virtue of calculations.

Document EP 2 866 052 A1 relates to a system for monitoring a maritime environment. The system includes a plurality of detection devices for detecting objects in the maritime environment according to different object detection schemes. A processor determines locations of the objects upon the basis of received detection signals.

Document US 2013/070556 A1 relates to an aircraft location system for locating aircraft in water environments. The system comprises an aircraft structure and a number of acoustic reflectors associated with the aircraft structure. The number of acoustic reflectors generate first sound signals in response to receiving second sound signals.

### SUMMARY

It is an object of the present invention to provide a concept for detecting plastics, macro-plastics, micro-plastics and nano-plastics in a maritime, estuary or river environment.

This object is achieved by the features of the independent claims. Further implementation forms are apparent from the dependent claims, the description and the figures.

The invention is based on the finding that different detection wavelengths may be used for detecting the plastics, the macro-plastics, the micro-plastics and the nano-plastics in the maritime, estuary or river environment. Due to different characteristics of plastics, macro-plastics, micro-plastics and nano-plastics at different detection wavelengths, a detection and/or classification of the different plastics may be achieved with increased accuracy.

The nano-plastics may be formed by very small fibers, the micro-plastics may be formed by small fibers, and the macro-plastics may be formed by larger plastic objects. The macro-plastics, the micro-plastics, and the nano-plastics may be dispensed within the water. The plastics may refer to larger plastic objects, and may float on the water.

According to a first aspect, the invention relates to a system for detecting plastics, macro-plastics, micro-plastics and nano-plastics in a maritime, estuary or river environment. The system comprises a plurality of detection devices for detecting the plastics, the macro-plastics, the micro-plastics and the nano-plastics in the environment, the detection devices being configured for detection using different detection wavelengths. The system further comprises a data processing device, comprising a communication interface and a processor. The communication interface is configured to receive detection signals from the plurality of detection devices. The processor is configured to determine locations of the plastics, the macro-plastics, the micro-plastics and the nano-plastics in the environment upon the basis of the received detection signals within a common coordinate system.

In an embodiment of the system, the different detection wavelengths are used for evaluating elastic and/or non-elastic scattering of visible and/or invisible light, wherein the processor is configured to perform at least one data processing method, in particular a real time processing method and/or an artificial intelligence processing method, and wherein the plurality of detection devices comprise micro-integrated electronics, laser diodes, fiber-optics for light piping and/or a distributed components layout.

In an embodiment of the system, the system is configured to provide information on plastics, macro-plastics, micro-plastics and nano-plastics spatial distribution within the environment using spatial mapping through the use of scanning and/or spatial measurements and/or temporal measurements with in-situ observation feeds into circulation models, and wherein the processor is configured to validate satellite observations.

In an embodiment of the system, the system is configured to use as one of the plurality of detection devices, a multispectral laser/light detection and ranging device (Ladar or Lidar) for selective plastic detection and plastic type classification.

In an embodiment of the system, the system is configured to use multiple simultaneous and/or sequential wavelengths for optimum detection and classification, in particular a blue-green laser beam for micro-plastics detection, a green laser beam for macro-plastics detection and/or a red laser beam for the detection of plastics or objects.

In an embodiment of the system, the system is configured to use a UV beam for nano-plastic and/or organic substance detection, wherein the system is configured to evaluate elastic scattering to provide specific signatures of substances, in particular evaluating fluorescence to detect and discriminate against organic material.

In an embodiment of the system, at least one of the plurality of detection devices is configured to generate a multispectral Laser/Light beam to penetrate a water surface within the environment and to obtain a high sensitivity 2D image and/or a high-resolution 3D image.

In an embodiment of the system, the processor is configured to provide information on plastics, macro-plastics, micro-plastics and nano-plastics spatial hotspots using the detections signals from the plurality of detection devices to provide accurate local measurements.

In an embodiment of the system, the processor is configured to provide quantitative information, in particular mass per volume and/or plastics size distribution information, on the plastics, the macro-plastics, the micro-plastics and the nano-plastics on the basis of the received detection signals.

In an embodiment of the system, the processor is configured to use a classification method implemented to provide classification of plastics, macro-plastics, micro-plastics and nano-plastics types using multiplexed colours, in particular in the range of UV through visible, to infrared, the use of spectroscopy and/or the use of fluorescence for detection and classification within the environment.

In an embodiment of the system, the processor is configured to use the received detection signals in conjunction with an integrated GPS position signal, an attitude control signal, and/or a laser range finding signal, to provide geo-location information of the plastics, the macro-plastics, the micro-plastics and the nano-plastics in the environment.

In an embodiment of the system, the processor is configured to provide an indication of a vertical distribution of the plastics, the macro-plastics, the micro-plastics and the nano-plastics in the environment, wherein at least one of the plurality of detection devices is configured to use wavelengths that penetrate a water column by using multiplexed colours, in particular in the range of UV through visible, to infrared.

In an embodiment of the system, the processor is configured to identify specific plastics, macro-plastics, micro-plastics and nano-plastics chemical composition and/or size distribution using multiplexed colours, in particular in the range of UV through visible, to infrared, the use of spectroscopy, the use of fluorescence, the use of collimated laser light to 1mrad and/or the use of high range resolution to millimetre and centimetre scale.

In an embodiment of the system, the processor is configured to detect and classify nano-plastics, including plastics broken down to particles smaller than 1 micrometre, wherein at least one of the plurality of detection devices is configured to use a light with wavelengths smaller than 1 micrometre, in particular 300nm, which enables interaction with extremely small particles through Rayleigh scattering and/or other optical effects such as fluorescence and Raman scattering.

In an embodiment of the system, the processor is configured to detect and classify micro-plastics and to work with plastics with particle sizes in the micrometre to millimetre range, wherein at least one of the plurality of detection devices is configured to use a micrometre scale light that provides detection of plastics by spatial resonance and/or by semi-specular reflection.

In an embodiment of the system, the processor is configured to detect and classify macro-plastics and work with plastics with sizes larger than millimetre to large plastic objects, wherein at least one of the plurality of detection devices is configured to use specular reflection and diffusing of the scattering of light from the identified macro-plastics.

In an embodiment of the system, the processor is configured to discriminate between plastics and natural phenomena, in particular waves, natural algae, fish and organisms, natural occurring hydrocarbons and oil, and/or air bubbles, wherein the system is operable in different sea states and natural waters, wherein the processor is configured to isolate reflections from a water surface using high performance codes having low sidelobes and/or a high spatial precision, in particular to 10cm, allowing operation of the system.

In an embodiment of the system, the processor is configured to use additional data from camera sensors, radars or high resolution radars, acoustical sensors or sonars, other data provided by signal processing and object detection from optical sensors, along with data fusion with data from a laser/light detection and ranging (Ladar or Lidar) device.

In an embodiment of the system, the communication interface is configured to receive data insitu from chemical sensors, wherein the processor is configured to use geolocation-based processing.

In an embodiment of the system, the processor is configured to operate with and receive input from ocean current models, waves models and/or wind models, in particular Meta-Ocean Models, by fusing laser/light detection and ranging (Ladar or Lidar) device data measurement at several locations and several time locations with historic/NOWcast/FORECAST models, for allowing plastic's precise location detection after a period of time.

In an embodiment of the system, the system is operable in a configuration that can be used, mounted and/or located on variety of platforms, vessels, sub-merged vessels, aircrafts, drones, and autonomous vessels/aircrafts, amongst others, using its modular and flexible construction, by being small and compact in size, with its electronics being of small size, low power consumption, light is fed by flexible fibre optics to apertures in fuselage and the configurations to use its included GPS (surface, aircraft) and Inertial Navigation System (INS) and a laser beam at 1 miliradian or more according to a user's configurations.

In an embodiment of the system, the system is operable in a configuration that can investigate specific areas in the environment to provide detailed data and can be located on stationary/hovering platforms which can increase resolution and sensitivity by use of adaptive processing and supported by precise navigation tools, in particular GPS when a Ladar is above water, or another precise navigation system when a Ladar is under water.

In an embodiment of the system, the system is operable in a configuration that allows a large scale of deployment to cover great lengths of area for detecting the plastics, the macro-plastics, the micro-plastics and the nano-plastics in the environment, in particular due to its inexpensive components and production methods, software based design, remote software control and/or open interfaces.

In an embodiment of the system, the system is operable in a configuration that is configured to sample large expanses of sea as it can operate from large altitudes to cover large areas and can also be mounted on fast vessels or aircrafts with instantaneous measurements and sample in trajectories and can have side-scanning to generate data over a wide swath.

In an embodiment of the system, the system is operable in a configuration wherein a Ladar/Lidar sensor is supplemented with other sensors, and wherein the sensors form one kit/black box that is able to monitor a footprint of a certain geographical area, and wherein the footprint can be expanded by scanning around the sensors for 360 degrees, and the footprint may sweep around in a circle and scan that specific geographical area.

In an embodiment of the system, the system is operable in a configuration wherein there are more kits/black boxes that have a similar footprint, such that a plurality of scanning units can be aligned in a line or a grid, connected with fiber optics to a communication network, and each of the units is configured either to scan in a dedicated footprint or each of the units is configured to scan in circles around the respective sensor, for covering a greater area of scanning when more scanning units are used.

In an embodiment of the system, the system is operable in a configuration wherein a black box/kit with a sensor, either on a fixed point, in particular a buoy or a platform, or on a vehicle that is on the move, in particular a vessel, is linked with a drift model, so as to determine the trajectories of the plastic over the course of days, weeks and/or months, while taking into account factors of wind fetch, wave interaction and/or ocean currents, and to determine where the plastic's final geographical location will be over the period of time.

In an embodiment of the system, the system is configured to operate irresectable of atmospheric and/or sea-state conditions, in particular fog, rain, ice, snow, sun glitters, and/or sunshine, by using high performance coding of a laser waveform with large entropy, in particular Golay codes.

In an embodiment of the system, the system is configured to be self-learning by automatic and manual feedback to provide accurate information and can include Artificial Intelligence (Al) methods for self-learning and self-optimisation such as when an object is identified and verified using correlation techniques to patterns, geo-structural information, chemical information amongst others, wherein this information can be integrated in the self-learning algorithm and used with the return signals for plastic detection and identification.

In an embodiment of the system, the system is modular and configurable to adapt to user needs, in particular having installations where electronics and sensors are arranged at different locations, separated by fibre up to 500m for short distances and up to several kilometres for long distances, mechanical implementation, micro-electronics, fibre optics, cost related to the system, software based design, remote software control, and/or open interfaces.

In an embodiment of the system, the system is safe for the eyes of the user and the people in its proximity and provides safety from high illuminative optical power, making it safe to use in different conditions with programmable laser power, controlled laser beam divergence, day and night operating modes, and/or a selectable wavelength which includes an eye safety wavelength.

According to a second aspect, the invention relates to a method for operating a system for detecting plastics, macro-plastics, micro-plastics and nano-plastics in a maritime, estuary or river environment. The system comprises a plurality of detection devices and a data processing device comprising a communication interface and a processor. The detection devices are configured for detection using different detection wavelengths. The method comprises detecting, by the plurality of detection devices, the plastics, the macro-plastics, the micro-plastics and the nano-plastics in the environment, receiving, by the communication interface, detection signals from the plurality of detection devices, and determining, by the processor, locations of the plastics, the macro-plastics, the micro-plastics and the nano-plastics in the environment upon the basis of the received detection signals within a common coordinate system.

The method can be performed by the system. Further features of the method directly result from the features and/or the functionality of the system.

According to a third aspect, the invention relates to a computer program for performing the method when executed by a system, in particular to provide relevant information, including location, characterisation and identification of the plastics detected.

Further embodiments of the invention will be described with respect to the following figures, in which:
Fig. 1 shows a schematic diagram of a system for detecting plastics, macro-plastics, micro-plastics and nano-plastics in a maritime, estuary or river environment;
Fig. 2 shows a schematic diagram of a method for operating a system for detecting plastics, macro-plastics, micro-plastics and nano-plastics in a maritime, estuary or river environment;
Fig. 3 shows a schematic diagram of a maritime vessel comprising a system for detecting plastics, macro-plastics, micro-plastics, and nano-plastics in a maritime, estuary or river environment;
Fig. 4 shows a schematic diagram of a maritime vessel comprising a system for detecting plastics, macro-plastics, micro-plastics, and nano-plastics in a maritime, estuary or river environment;
Fig. 5 shows a schematic diagram illustrating the scattering within water in dependence of wavelength;
Fig. 6 shows a schematic diagram illustrating the transmission within water in dependence of wavelength;
Fig. 7 shows a schematic diagram of different laser beams having different wavelengths;
Fig. 8 shows a schematic diagram of a multi-spectral laser beam;
Fig. 9 shows a schematic diagram of a blue-green laser beam; and
Fig. 10 shows a schematic diagram of a plurality of detection devices.

### DETAILED DESCRIPTION OF EMBODIMENTS

In the following description, reference is made to the accompanying figures, which form part of the disclosure, and which show, by way of illustration, specific aspects of embodiments of the invention or specific aspects in which embodiments of the invention may be used. It is understood that embodiments of the invention may be used in other aspects and comprise structural or logical changes not depicted in the figures. The following detailed description, therefore, is not to be taken in a limiting sense, and the scope of the invention is defined by the appended claims.

For instance, it is to be understood that a disclosure in connection with a described method may also hold true for a corresponding system configured to perform the method and vice versa. For example, if one or a plurality of specific method steps are described, a corresponding system may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific system is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

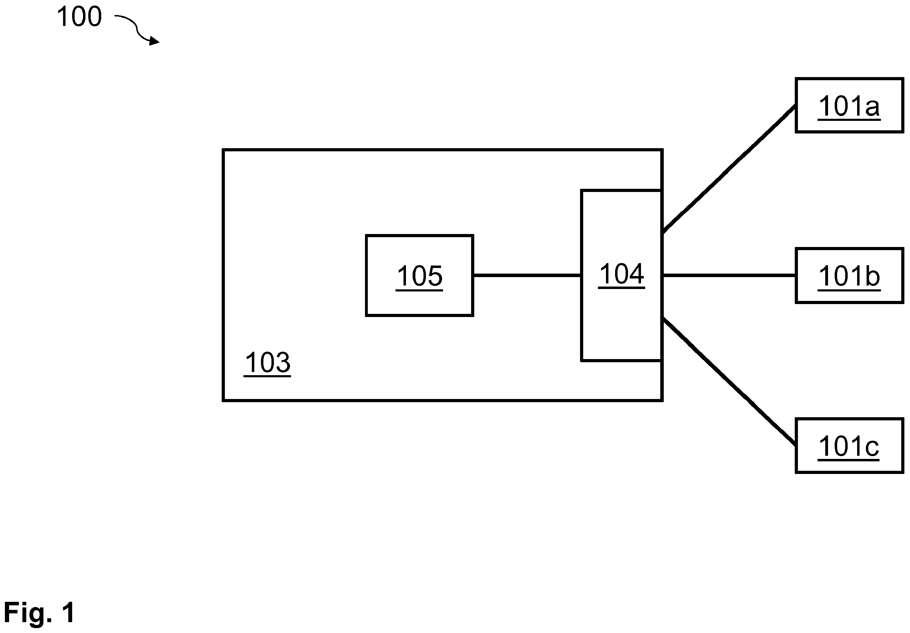

Fig. 1 shows a schematic diagram of a system 100 for detecting plastics, macro-plastics, micro-plastics and nano-plastics in a maritime, estuary or river environment.

The system 100 comprises a plurality of detection devices 101a, 101b, 101c for detecting the plastics, the macro-plastics, the micro-plastics and the nano-plastics in the environment, the detection devices 101a, 101b, 101c being configured for detection using different detection wavelengths. The system 100 further comprises a data processing device 103, comprising a communication interface 104 and a processor 105. The communication interface 104 is configured to receive detection signals from the plurality of detection devices 101a, 101b, 101c. The processor 105 is configured to determine locations of the plastics, the macro-plastics, the micro-plastics and the nano-plastics in the environment upon the basis of the received detection signals within a common coordinate system.

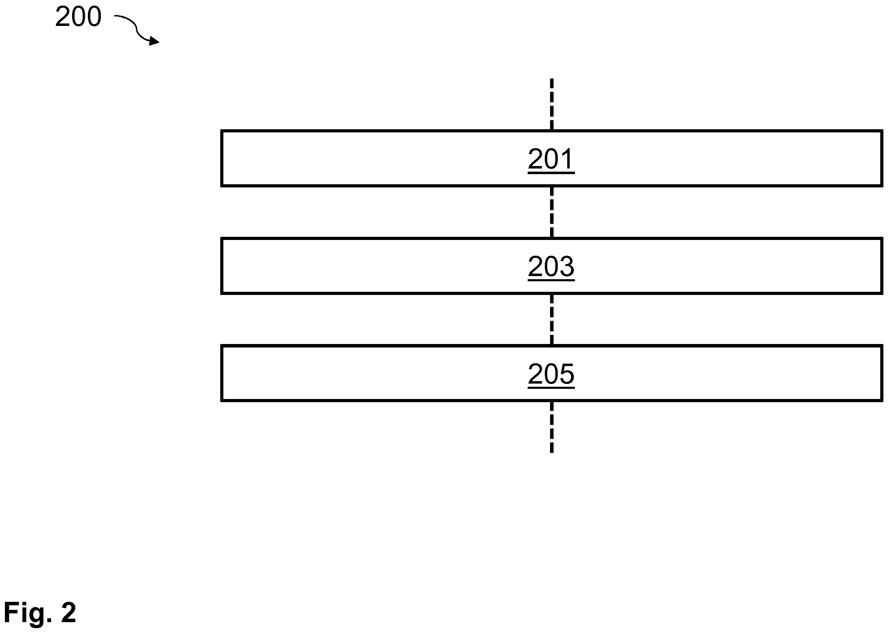

Fig. 2 shows a schematic diagram of a method 200 for operating a system for detecting plastics, macro-plastics, micro-plastics and nano-plastics in a maritime, estuary or river environment. The system comprises a plurality of detection devices and a data processing device comprising a communication interface and a processor. The detection devices are configured for detection using different detection wavelengths.

The method 200 comprises detecting 201, by the plurality of detection devices, the plastics, the macro-plastics, the micro-plastics and the nano-plastics in the environment, receiving 203, by the communication interface, detection signals from the plurality of detection devices, and determining 205, by the processor, locations of the plastics, the macro-plastics, the micro-plastics and the nano-plastics in the environment upon the basis of the received detection signals within a common coordinate system.

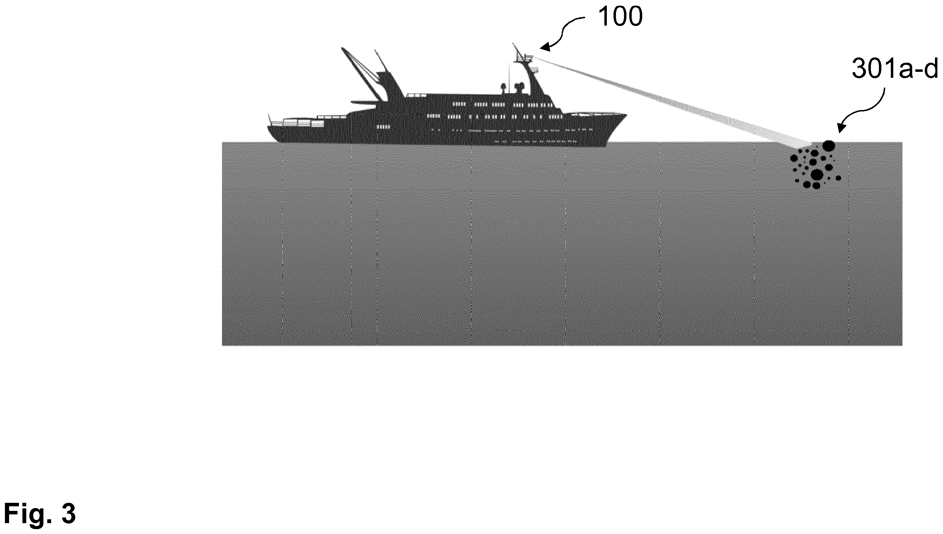

Fig. 3 shows a schematic diagram of a maritime vessel comprising a system 100 for detecting plastics 301a, macro-plastics 301b, micro-plastics 301c, and nano-plastics 301d in a maritime, estuary or river environment.

Exemplarily, the system 100 is mounted on a mast of the maritime vessel. In general, however, the system 100 may be arranged on a wide variety of platforms, e.g., any martime vessel, submarine, offshore plaftform, pier, aquaculture tank, and the like. In other words, the system 100 may be mounted on any surface vessel or coastal infrastructure.

In this example, a Ladar may be used as a detection device. The in-situ Ladar may measure basic plastic types and quantities. The Ladar in-situ observations may be fed into circulation models and may be used to validate satellite observations.

As a result, an enhanced knowledge of the origin of the plastics 301a, the macro-plastics 301b, the micro-plastics 301c, and the nano-plastics 301d may be provided. Furthermore, knowledge of the location and the type of plastic may facilitate cost-efficient clean-up operations in the environment.

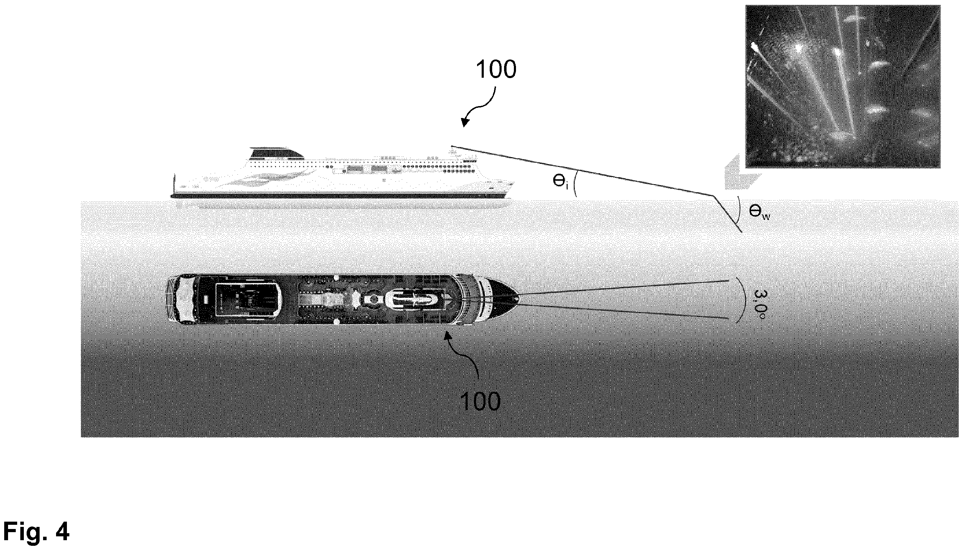

Fig. 4 shows a schematic diagram of a maritime vessel comprising a system 100 for detecting plastics, macro-plastics, micro-plastics, and nano-plastics in a maritime, estuary or river environment.

In this example, a Ladar may be used as a detection device. The laser beam is transmitted towards the water surface at an angle θᵢ and is refracted into the water at an angle θ_{w}. The azimuthal width of the laser beam may e.g. be 3,0°.

The laser beam comprises a plurality of different wavelength, which may be generated simultaneously or sequentially for detecting the plastics, the macro-plastics, the micro-plastics, and the nano-plastics. The laser beam interacts with the plastics, the macro-plastics, the micro-plastics, and the nano-plastics in the water.

The plurality of different wavelength may be used for detecting the plastics, the macro-plastics, the micro-plastics, and the nano-plastics.

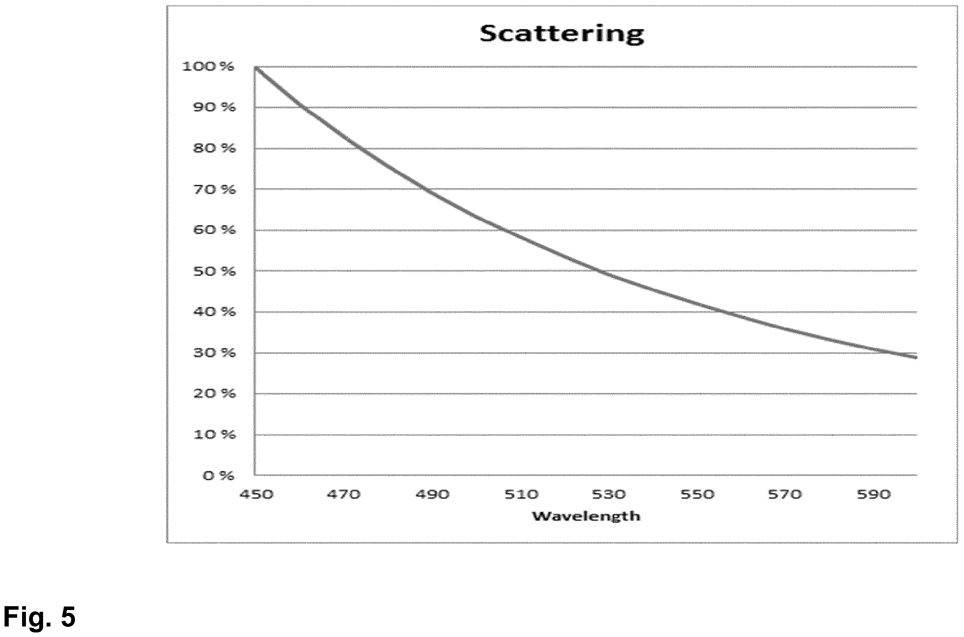

Fig. 5 shows a schematic diagram illustrating the scattering within water in dependence of wavelength. As can be seen, the scattering decreases with increasing wavelength.

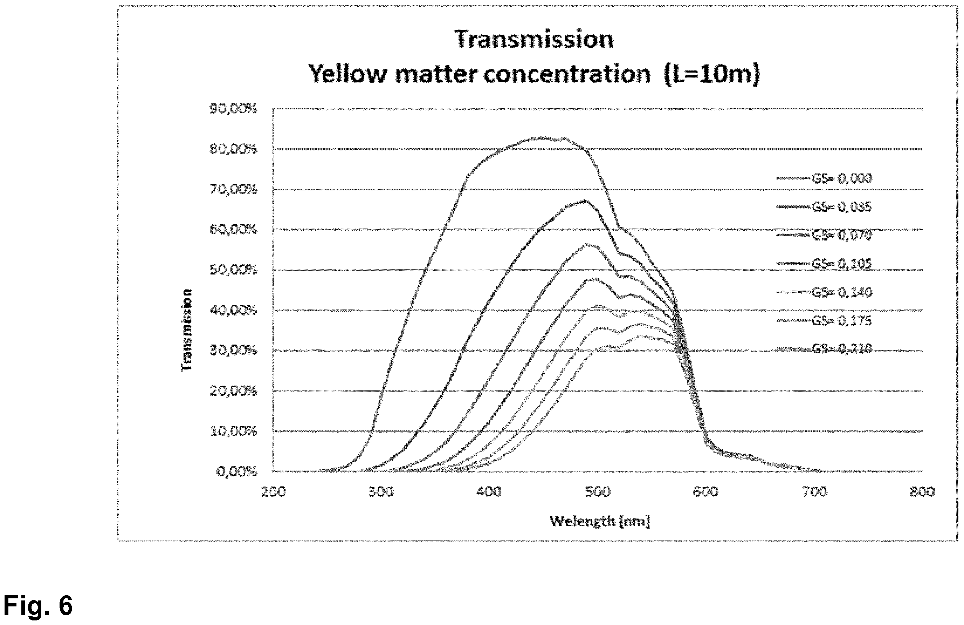

Fig. 6 shows a schematic diagram illustrating the transmission within water in dependence of wavelength. As can be seen, the transmission varies with wavelength. Exemplary coefficients are given as follows: GS=0 for clean sea water, GS=0.07 for north sea water, and GS=0.24 for Baltic sea water.

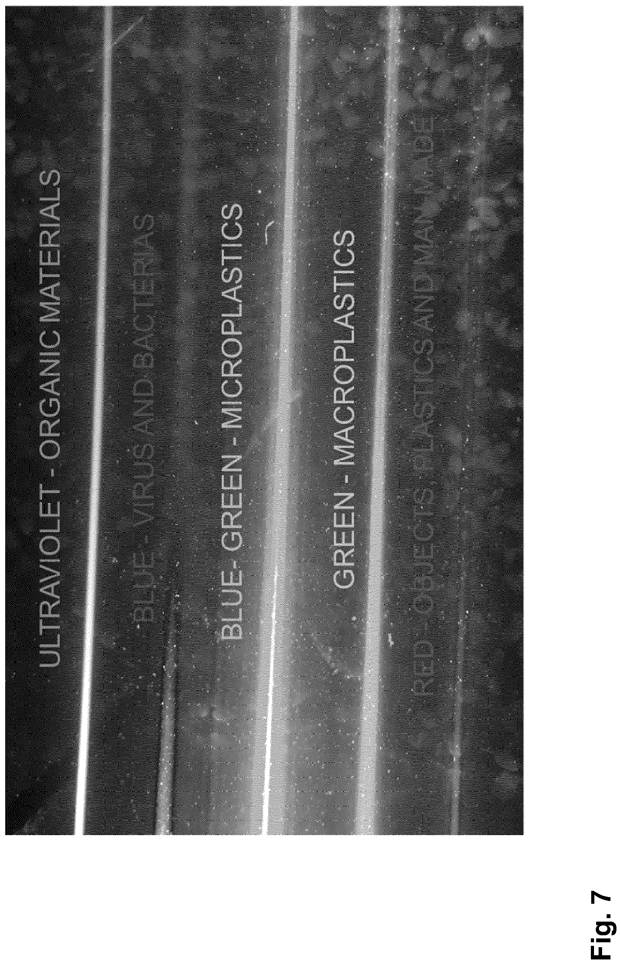

Fig. 7 shows a schematic diagram of different laser beams having different wavelengths. An ultraviolet laser beam may be suitable to detect organic materials; a blue laser beam may be suitable to detect viruses and bacteria; a blue-green laser beam may be suitable to detect micro-plastics; a green laser beam may be suitable to detect macro-plastics; and a red laser beam may be suitable to detect further objects, plastics and other man made material.

The system may provide a multi-spectral Ladar for the selective detection of the plastics. The multi-spectral Ladar may be realized using different single-spectral Ladars as different detection devices. However, the multi-spectral Ladar may also be realized within a single detection device.

Laser / Light for detection may particularly be suitable since it penetrates water, and reflects from the plastics, the macro-plastics, the micro-plastics, and the nano-plastics. The penetration may amout to depths of e.g. 1 to 10 meters.

The nano-plastics may be formed by very small fibers, the micro-plastics may be formed by small fibers, and the macro-plastics may be formed by larger plastic objects. The macro-plastics, the micro-plastics, and the nano-plastics may be dispensed within the water. The plastics may refer to larger plastic objects, and may float on the water.

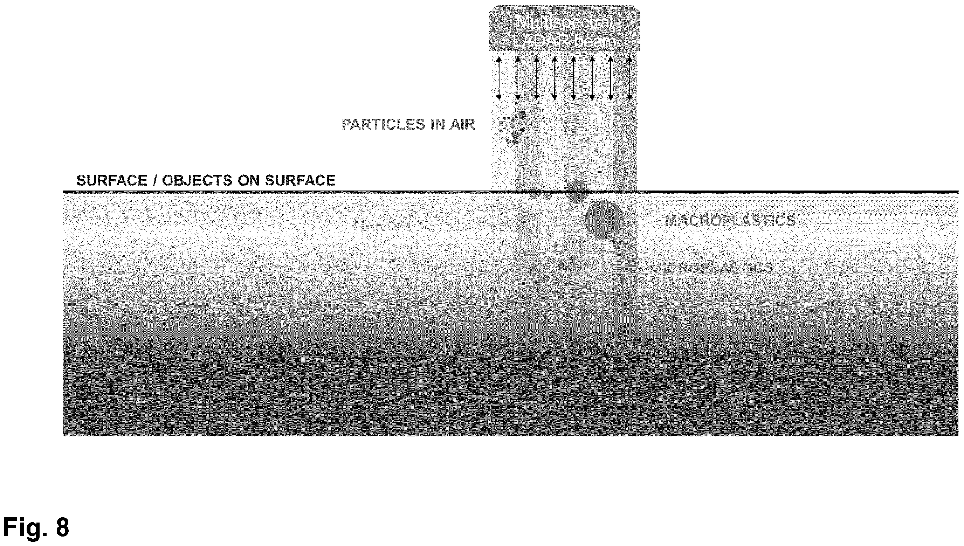

Fig. 8 shows a schematic diagram of a multi-spectral laser beam. The multi-spectral laser beam comprises a plurality of different wavelengths for detecting the macro-plastics, the micro-plastics, and the nano-plastics dispensed within the water. The system may be capable of mitigating the effect of particles dispensed in the air. The system may perform a selective detection process.

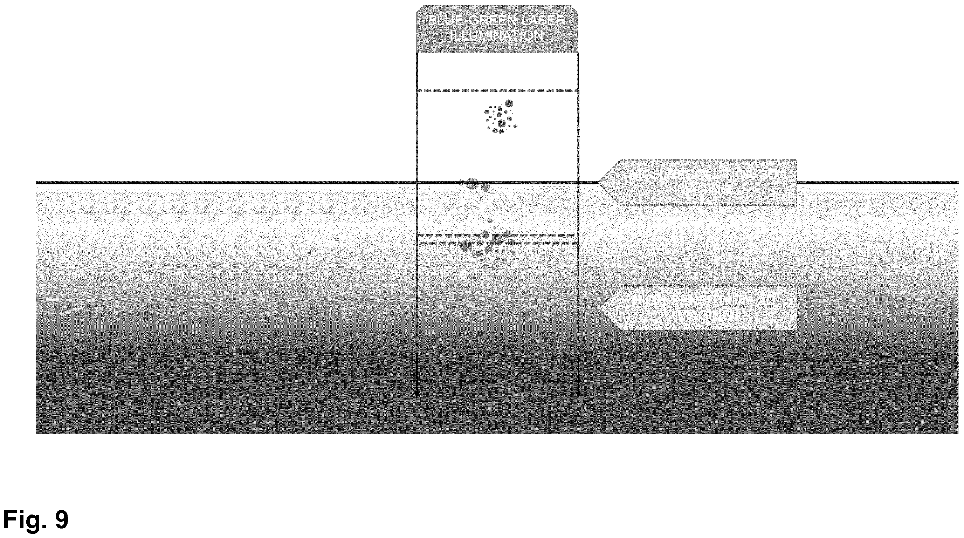

Fig. 9 shows a schematic diagram of a blue-green laser beam. The illumination of the water by the blue-green laser beam may allow for providing a high resolution 3D imaging and/or a high sensitivity 2D imaging for detecting plastics, macro-plastics, micro-plastics and nano-plastics on or below the water surface.

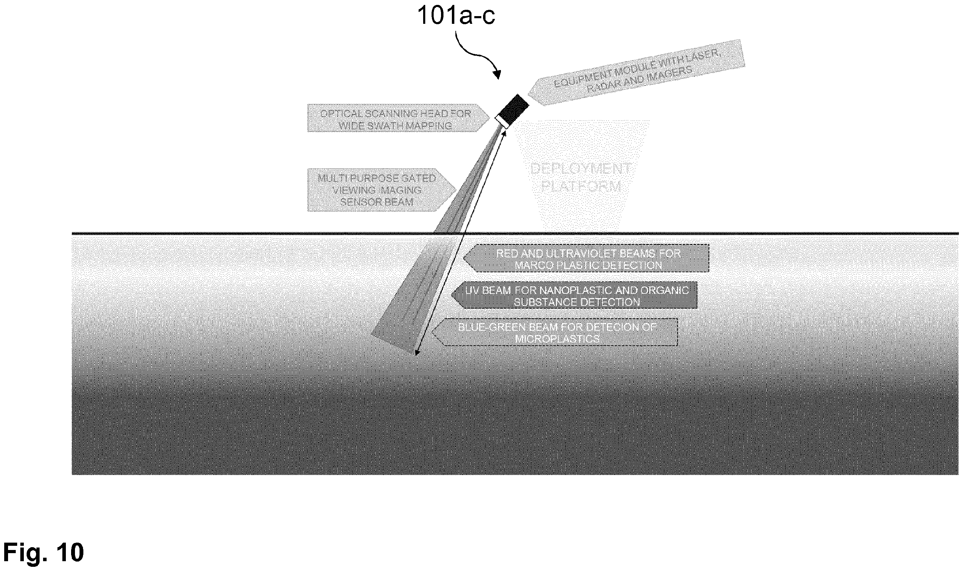

Fig. 10 shows a schematic diagram of a plurality of detection devices 101a, 101b, 101c. The detection devices 101a, 101b, 101c may be arranged within an equipment module. The detection devices 101a, 101b, 101c may e.g. be realized as a Ladar, Radar and Imager.

The plurality of detection devices 101a, 101b, 101c may be equipped with a scanning head, in particular an optical scanning head, for wide swath mapping. The plurality of detection devices 101a, 101b, 101c may provide a multi-purpose gated viewing imaging sensor beam.

Red and ultraviolet laser beams may be used for macro-plastic detection; UV laser beams may be used for nano-plastics and organic substance detection; and blue-green laser beams may be used for detection of micro-plastics.

The system may be used for a plurality of applications and purposes. The system may e.g. be used for facilitating clean-up operations in the environment. Furthermore, the system may be used in military applications for detection of submarines / divers / floating mines; in fishery applications for pelagic fish mapping and water turbidity determination; in safety applications for collision avoidance; in security applications for surveillance below and above the water surface; and in charting applications for sea floor mapping / bathymetry. The system may be deployed in multi-purpose applications, and may provide a cost-effective solution for detection, classification and mapping within maritime, estuary or river environments.

Further embodiments of the system are defined as follows:
In an embodiment, the system can provide information on plastics spatial distribution. This may be achieved by spatial mapping through the use scanning and spatial/temporal measurement.

In an embodiment, the system can provide information on plastics hotspots. This may be achieved by accurate local measurements.

In an embodiment, the system can provide quantitative information on plastics. This may be achieved by classification methods.

In an embodiment, the system can be used on a variety of platforms. This may be achieved by a modular and flexible construction, and/or the use of microelectronics, small laser diodes, use of fiberoptics for light piping, and a sensor head separable from the electronics.

In an embodiment, the system can provide precise geolocation of plastics in the ocean. This may be achieved by using GPS, attitude control, and/or laser range finding.

In an embodiment, the system can provide indication of vertical distribution of plastics. This may be achieved by using of wavelengths that penetrate the water column, and/or multiplexed colours, in the range of UV through visible, to infrared.

In an embodiment, the system can provide a classification of plastics types. This may be achieved by using multiplexed colours, in the range of UV through visible, to infrared, by using spectroscopy, and/or using fluorescence.

In an embodiment, the system can identify specific plastics. This may be achieved by deciding on chemical composition and size distribution, and/or by using multiplexed colours, in the range of UV through visible, to infrared, by using spectroscopy, by using fluorescence, by using collimated laser light to 1mrad, and/or by using of high range resolution to 10cm.

In an embodiment, the system can detect and classify nano plastics. To work with plastics broken down to particles smaller than 1 micrometre, this may be achieved by using light with wavelengths smaller than 1 micrometer, e.g. 300nm, enabling an interaction with extremely small particles through Rayleigh scattering. Also other optical effects such as fluorescence and Raman scattering may be considered.

In an embodiment, the system can detect and classify micro-plastics. To work with plastics with particle sizes micrometer to millimeter, this may be achieved by using micrometer scale light providing detection of plastics by spatial resonance and by semi specular reflection.

In an embodiment, the system can detect and classify macro-plastics. To work with plastics with sizes larger than millimeter to large plastic objects, this may be achieved by detecting objects by specular reflection and by diffuse scattering of light from objects.

In an embodiment, the system can discriminate between plastics and natural phenomena and can operate in natural waters. This may be achieved by using multiplexed colours, in the range of UV through visible, to infrared, by using spectroscopy, by using fluorescence, by using of collimated laser light to 1mrad, and/or by using high range resolution to 10cm.

In an embodiment, the system can operate irrespective of fog, rain and sunshine. This may be achieved by using high performance coding of the laser waveform with large entropy, e.g. using Golay codes.

In an embodiment, the system can operate in different sea states and/or can isolate reflection from the sea surface. This may be achieved by using high performance codes which also have low sidelobes, and/or high spatial precision, e.g. to 10cm.

In an embodiment, the system can use additional data from camera sensors and/or use signal processing and/or object detection from optical sensors, in conjunction with data fusion with data from a LADAR.

In an embodiment, the system can use additional data from radar sensors and/or use signal processing and/or object detection from radar sensors, in conjunction with data fusion with data from a LADAR.

In an embodiment, the system can use additional data from acoustical sensors and/or use signal processing and/or object detection from acoustical sensors or sonars, in conjunction with data fusion with data from a LADAR.

In an embodiment, the system can use additional data from chemical sensors, e.g. in-situ. A geolocation based processing may be used.

In an embodiment, the system can work with ocean current models. This may be achieved by fusing LADAR data measurements at several locations and several time locations with historic/NOWcast/FORECAST ocean and current models.

In an embodiment, the system is self-learning. The system may learn by automatic and/or manual feedback to provide accurate information. The system may use Al (Artificial Intelligence) methods for self-learning and/or self-optimisation.

In an embodiment, the system can be installed on a maritime vessel, e.g. a ship.

In an embodiment, the system can be installed on a submerged vessel. This may be achieved because electronics may have small size, low power consumption, and/or light being fed by flexible fiber optics to apertures in fuselage.

In an embodiment, the system can be used on an aircraft. This may be achieved because electronics may have small size, low power consumption, and/or light being fed by flexible fiber optics to apertures in fuselage.

In an embodiment, the system can be used on an autonomous vessels/aircraft. The system may have included a GPS (surface, aircraft) and an INS (Inertial Navigation System), and/or may use a precise laser beam at 1 milliradian.

In an embodiment, the system can sample large expanses of sea. The system can operate on fast ship or aircraft, may provide instantaneous measurements, can sample in trajectories, can have side-scanning to generate data over wide swaths, and/or can operate from large altitudes to cover large areas.

In an embodiment, the system can investigate specific areas to give detailed data. The system can operate from stationary/hovering platforms, can increase resolution and sensitivity by use of adaptive processing, and/or can be supported by precise navigation tools.

In an embodiment, the system is modular and configurable to adapt to user needs. This may be achieved by using installations where electronics and sensor heads are at different locations, separated by fiber e.g. by up to 500m, suitable mechanical implementation, usage of microelectronics, fiber optics, low cost components, software based design, remote software control, and/or open interfaces.

In an embodiment, the system is small and compact. This may allow the system to be used on even very small platforms, down to small UAVs and drones. This may be achieved by suitable mechanical implementation, usage of microelectronics, fiber optics, low cost components, software based design, remote software control, and/or open interfaces.

In an embodiment, the system is inexpensive to facilitate large scale deployment. This may be achieved by suitable mechanical implementation, usage of microelectronics, fiber optics, low cost components, software based design, remote software control, and/or open interfaces.

In an embodiment, the system is eye safe to facilitate use in specific platforms. This may be achieved using a programmable laser power, a controlled laser beam divergence, day and night operating modes, and/or selectable wavelengths including eye safe wavelengths.

### REFERENCE SIGNS

- 100: System
- 101a: Detection device
- 101b: Detection device
- 101c: Detection device
- 103: Data processing device
- 104: Communication interface
- 105: Processor

- 200: Method
- 201: Detecting
- 203: Receiving
- 205: Determining

- 301a: Plastics
- 301b: Macro-plastics
- 301c: Micro-plastics
- 301d: Nano-plastics

## Claims

1. A system (100) for detecting plastics (301a) in a maritime, estuary or river environment, **characterized in that** the system is further used for detecting macro-plastics (301b), micro-plastics (301c) and nano-plastics (301d) and that the system (100) comprises:
a plurality of detection devices (101a, 101b, 101c) for detecting the plastics (301a), the macro-plastics (301b), the micro-plastics (301c) and the nano-plastics (301d) in the environment, the detection devices (101a, 101b, 101c) being configured for detection using different detection wavelengths; and
a data processing device (103), comprising a communication interface (104) and a processor (105), wherein the communication interface (104) is configured to receive detection signals from the plurality of detection devices (101a, 101b, 101c), and wherein the processor (105) is configured to determine locations of the plastics (301a), the macro-plastics (301b), the micro-plastics (301c) and the nano-plastics (301d) in the environment upon the basis of the received detection signals within a common coordinate system.

2. The system (100) of claim 1, wherein the different detection wavelengths are used for evaluating elastic and/or non-elastic scattering of visible and/or invisible light, wherein the processor (105) is configured to perform at least one data processing method, in particular a real time processing method and/or an artificial intelligence processing method, and wherein the plurality of detection devices (101a, 101b, 101c) comprise micro-integrated electronics, laser diodes, fiber-optics for light piping and/or a distributed components layout.

3. The system (100) of any of the preceding claims, wherein the system (100) is configured to provide information on plastics, macro-plastics, micro-plastics and nano-plastics spatial distribution within the environment using spatial mapping through the use of scanning and/or spatial measurements and/or temporal measurements with in-situ observation feeds into circulation models, and wherein the processor (105) is configured to validate satellite observations.

4. The system (100) of any of the preceding claims, wherein the system (100) is configured to use as one of the plurality of detection devices, a multispectral laser/light detection and ranging device for selective plastic detection and plastic type classification.

5. The system (100) of any of the preceding claims, wherein the system (100) is configured to use multiple simultaneous and/or sequential wavelengths for optimum detection and classification, in particular a blue-green laser beam for micro-plastics detection, a green laser beam for macro-plastics detection and/or a red laser beam for the detection of plastics or objects.

6. The system (100) of any of the preceding claims, wherein the system (100) is configured to use a UV beam for nano-plastic and/or organic substance detection, wherein the system (100) is configured to evaluate elastic scattering to provide specific signatures of substances, in particular evaluating fluorescence to detect and discriminate against organic material.

7. The system (100) of any of the preceding claims, wherein at least one of the plurality of detection devices (101a, 101b, 101c) is configured to generate a multispectral Laser/Light beam to penetrate a water surface within the environment and to obtain a high sensitivity 2D image and/or a high-resolution 3D image.

8. The system (100) of any of the preceding claims, wherein the processor (105) is configured to provide information on plastics, macro-plastics, micro-plastics and nano-plastics spatial hotspots using the detections signals from the plurality of detection devices (101a, 101b, 101c) to provide accurate local measurements.

9. The system (100) of any of the preceding claims, wherein the processor (105) is configured to provide quantitative information, in particular mass per volume and/or plastics size distribution information, on the plastics (301a), the macro-plastics (301b), the micro-plastics (301c) and the nano-plastics (301d) on the basis of the received detection signals.

10. The system (100) of any of the preceding claims, wherein the processor (105) is configured to use a classification method implemented to provide classification of plastics, macro-plastics, micro-plastics and nano-plastics types using multiplexed colours, in particular in the range of UV through visible, to infrared, the use of spectroscopy and/or the use of fluorescence for detection and classification within the environment.

11. The system (100) of any of the preceding claims, wherein the processor (105) is configured to use the received detection signals in conjunction with an integrated GPS position signal, an attitude control signal, and/or a laser range finding signal, to provide geo-location information of the plastics (301a), the macro-plastics (301b), the micro-plastics (301c) and the nano-plastics (301d) in the environment.

12. The system (100) of any of the preceding claims, wherein the processor (105) is configured to provide an indication of a vertical distribution of the plastics (301a), the macro-plastics (301b), the micro-plastics (301c) and the nano-plastics (301d) in the environment, wherein at least one of the plurality of detection devices (101a, 101b, 101c) is configured to use wavelengths that penetrate a water column by using multiplexed colours, in particular in the range of UV through visible, to infrared.

13. The system (100) of any of the preceding claims, wherein the processor (105) is configured to identify specific plastics, macro-plastics, micro-plastics and nano-plastics chemical composition and/or size distribution using multiplexed colours, in particular in the range of UV through visible, to infrared, the use of spectroscopy, the use of fluorescence, the use of collimated laser light to 1mrad and/or the use of high range resolution to millimetre and centimetre scale.

14. The system (100) of any of the preceding claims, wherein the processor (105) is configured to detect and classify nano-plastics (301d), including plastics broken down to particles smaller than 1 micrometre, wherein at least one of the plurality of detection devices (101a, 101b, 101c) is configured to use a light with wavelengths smaller than 1 micrometre, in particular 300nm, which enables interaction with extremely small particles through Rayleigh scattering and/or other optical effects such as fluorescence and Raman scattering.

15. The system (100) of any of the preceding claims, wherein the processor (105) is configured to detect and classify micro-plastics (301c) and to work with plastics with particle sizes in the micrometre to millimetre range, wherein at least one of the plurality of detection devices (101a, 101b, 101c) is configured to use a micrometre scale light that provides detection of plastics by spatial resonance and/or by semi-specular reflection.

16. The system (100) of any of the preceding claims, wherein the processor (105) is configured to detect and classify macro-plastics (301b) and work with plastics with sizes larger than millimetre to large plastic objects, wherein at least one of the plurality of detection devices (101a, 101b, 101c) is configured to use specular reflection and diffusing of the scattering of light from the identified macro-plastics (301b).

17. The system (100) of any of the preceding claims, wherein the processor (105) is configured to discriminate between plastics and natural phenomena, in particular waves, natural algae, fish and organisms, natural occurring hydrocarbons and oil, and/or air bubbles, wherein the system (100) is operable in different sea states and natural waters, wherein the processor (105) is configured to isolate reflections from a water surface using high performance codes having low sidelobes and/or a high spatial precision, in particular to 10cm, allowing operation of the system (100).

18. The system (100) of any of the preceding claims, wherein the processor (105) is configured to use additional data from camera sensors, radars or high resolution radars, acoustical sensors or sonars, other data provided by signal processing and object detection from optical sensors, along with data fusion with data from a laser/light detection and ranging device.

19. The system (100) of any of the preceding claims, wherein the communication interface (104) is configured to receive data insitu from chemical sensors, wherein the processor (105) is configured to use geolocation-based processing.

20. The system (100) of any of the preceding claims, wherein the processor (105) is configured to operate with and receive input from ocean current models, waves models and/or wind models, in particular Meta-Ocean Models, by fusing laser/light detection and ranging device data measurement at several locations and several time locations with historic/NOWcast/FORECAST models, for allowing plastic's precise location detection after a period of time.

21. The system (100) of any of the preceding claims, wherein the system (100) is operable in a configuration that can be used, mounted and/or located on variety of platforms, vessels, sub-merged vessels, aircrafts, drones, and autonomous vessels/aircrafts, amongst others, using its modular and flexible construction, by being small and compact in size, with its electronics being of small size, low power consumption, light is fed by flexible fibre optics to apertures in fuselage and the configurations to use its included GPS and Inertial Navigation System (INS) and a laser beam at 1 miliradian or more according to a user's configurations.

22. The system (100) of any of the preceding claims, wherein the system (100) is operable in a configuration that can investigate specific areas in the environment to provide detailed data and can be located on stationary/hovering platforms which can increase resolution and sensitivity by use of adaptive processing and supported by precise navigation tools, in particular GPS when a Ladar is above water, or another precise navigation system when a Ladar is under water.

23. The system (100) of any of the preceding claims, wherein the system (100) is operable in a configuration wherein a Ladar/Lidar sensor is supplemented with other sensors, and wherein the sensors form one kit/black box that is able to monitor a footprint of a certain geographical area, and wherein the footprint can be expanded by scanning around the sensors for 360 degrees, and the footprint may sweep around in a circle and scan that specific geographical area.

24. The system (100) of any of the preceding claims, wherein the system (100) is operable in a configuration wherein there are more kits/black boxes that have a similar footprint, such that a plurality of scanning units can be aligned in a line or a grid, connected with fiber optics to a communication network, and each of the units is configured either to scan in a dedicated footprint or each of the units is configured to scan in circles around the respective sensor, for covering a greater area of scanning when more scanning units are used.

25. The system (100) of any of the preceding claims, wherein the system (100) is operable in a configuration wherein a black box/kit with a sensor, either on a fixed point, in particular a buoy or a platform, or on a vehicle that is on the move, in particular a vessel, is linked with a drift model, so as to determine the trajectories of the plastic over the course of days, weeks and/or months, while taking into account factors of wind fetch, wave interaction and/or ocean currents, and to determine where the plastic's final geographical location will be over the period of time.

26. The system (100) of any of the preceding claims, wherein the system (100) is configured to be self-learning by automatic and manual feedback to provide accurate information and can include Artificial Intelligence (Al) methods for self-learning and self-optimisation such as when an object is identified and verified using correlation techniques to patterns, geo-structural information, chemical information amongst others, wherein this information can be integrated in the self-learning algorithm and used with the return signals for plastic detection and identification.

27. The system (100) of any of the preceding claims, wherein the system (100) is modular and configurable to adapt to user needs, in particular having installations where electronics and sensors are arranged at different locations, separated by fibre up to 500m for short distances and up to several kilometres for long distances, mechanical implementation, micro-electronics, fibre optics, cost related to the system, software based design, remote software control, and/or open interfaces.

28. The system (100) of any of the preceding claims, wherein the system (100) is safe for the eyes of the user and the people in its proximity and provides safety from high illuminative optical power, making it safe to use in different conditions with programmable laser power, controlled laser beam divergence, day and night operating modes, and/or a selectable wavelength which includes an eye safety wavelength.

29. A method (200) for operating a system (100) for detecting plastics (301a) in a maritime, estuary or river environment, **characterized in that** the system is further used for detecting macro-plastics (301b), micro-plastics (301c) and nano-plastics (301d) and that the system (100) comprises a plurality of detection devices (101a, 101b, 101c) and a data processing device (103) comprising a communication interface (104) and a processor (105), the detection devices (101a, 101b, 101c) being configured for detection using different detection wavelengths, the method (200) comprising the steps of
detecting (201), by the plurality of detection devices (101a, 101b, 101c), the plastics (301a), the macro-plastics (301b), the micro-plastics (301c) and the nano-plastics (301d) in the environment;
receiving (203), by the communication interface (104), detection signals from the plurality of detection devices (101a, 101b, 101c); and
determining (205), by the processor (105), locations of the plastics (301a), the macro-plastics (301b), the micro-plastics (301c) and the nano-plastics (301d) in the environment upon the basis of the received detection signals within a common coordinate system.

30. A computer program for performing the method (200) of claim 29 when executed by a system (100), in particular to provide relevant information, including location, characterisation and identification of the plastics detected.

## Patentansprüche

1. System (100) zum Erkennen von Kunststoffen (301a) in einer maritimen, Mündungs- oder Flussumgebung, **dadurch gekennzeichnet, dass** das System ferner zum Erkennen von Makrokunststoffen (301b), Mikrokunststoffen (301c) und Nanokunststoffen (301d) verwendet wird und dass das System (100) umfasst:
eine Vielzahl von Erkennungsvorrichtungen (101a, 101b, 101c) zum Erkennen der Kunststoffe (301a), der Makrokunststoffe (301b), der Mikrokunststoffe (301c) und der Nanokunststoffe (301d) in der Umgebung, wobei die Erkennungsvorrichtungen (101a, 101b, 101c) zum Erkennen unter Verwendung unterschiedlicher Erkennungswellenlängen ausgebildet sind; und
eine Datenverarbeitungsvorrichtung (103), umfassend eine Kommunikationsschnittstelle (104) und einen Prozessor (105), wobei die Kommunikationsschnittstelle (104) ausgebildet ist, Erkennungssignale von der Vielzahl von Erkennungsvorrichtungen (101a, 101b, 101c) zu empfangen, und wobei der Prozessor (105) ausgebildet ist, Orte der Kunststoffe (301a), der Makrokunststoffe (301b), der Mikrokunststoffe (301c) und der Nanokunststoffe (301d) in der Umgebung auf der Basis der empfangenen Erkennungssignale innerhalb eines gemeinsamen Koordinatensystems zu bestimmen.

2. System (100) nach Anspruch 1, wobei die unterschiedlichen Erkennungswellenlängen zum Bewerten elastischer und/oder nichtelastischer Streuung von sichtbarem und/oder unsichtbarem Licht verwendet werden, wobei der Prozessor (105) ausgebildet ist, mindestens ein Datenverarbeitungsverfahren, insbesondere ein Echtzeit-Datenverarbeitungsverfahren und/oder ein Verarbeitungsverfahren mit künstlicher Intelligenz, durchzuführen, und wobei die Vielzahl von Erkennungsvorrichtungen (101a, 101b, 101c) mikrointegrierte Elektronik, Laserdioden, Faseroptiken für Lichtleitungen und/oder ein verteiltes Komponentenlayout umfassen.

3. System (100) nach einem der vorhergehenden Ansprüche, wobei das System (100) ausgebildet ist, Informationen über die räumliche Verteilung von Kunststoffen, Makrokunststoffen, Mikrokunststoffen und Nanokunststoffen innerhalb der Umgebung unter Verwendung einer räumlichen Kartierung durch die Verwendung von Scan- und/oder räumlichen Messungen und/oder zeitlichen Messungen mit In-situ-Beobachtungszuführungen in Zirkulationsmodelle bereitzustellen, und wobei der Prozessor (105) ausgebildet ist, Satellitenbeobachtungen zu validieren.

4. System (100) nach einem der vorhergehenden Ansprüche, wobei das System (100) ausgebildet ist, eine multispektrale Laser-/Licht Erkennungs- und Entfernungsmessvorrichtung zur selektiven Kunststofferkennung und Kunststoffartenklassifizierung als eine der Vielzahl von Erkennungsvorrichtungen zu verwenden.

5. System (100) nach einem der vorhergehenden Ansprüche, wobei das System (100) ausgebildet ist, eine Vielzahl von gleichzeitigen und/oder sequentiellen Wellenlängen zur optimalen Erkennung und Klassifizierung zu verwenden, insbesondere einen blau-grünen Laserstrahl zur Mikrokunststofferkennung. einen grünen Laserstrahl zur Makro-Kunststofferkennung und/oder einen roten Laserstrahl zur Erkennung von Kunststoffen oder Gegenständen.

6. System (100) nach einem der vorhergehenden Ansprüche, wobei das System (100) ausgebildet ist, einen UV-Strahl zur Erkennung von Nanokunststoff und/oder organischer Substanz zu verwenden, wobei das System (100) ausgebildet ist, elastische Streuung zur Bereitstellung spezifischer Signaturen von Substanzen auszuwerten, insbesondere Fluoreszenz zur Erkennung und Unterscheidung von organischem Material auszuwerten.

7. System (100) nach einem der vorhergehenden Ansprüche, wobei mindestens eine der Vielzahl von Erkennungsvorrichtungen (101a, 101b, 101c) ausgebildet ist, einen multispektralen Laser/Lichtstrahl zu erzeugen, um eine Wasseroberfläche innerhalb der Umgebung zu durchdringen, und um ein 2D-Bild mit hoher Empfindlichkeit und/oder ein 3D-Bild mit hoher Auflösung zu erhalten.

8. System (100) nach einem der vorhergehenden Ansprüche, wobei der Prozessor (105) ausgebildet ist, Informationen über räumliche Hotspots von Kunststoffen, Makrokunststoffen, Mikrokunststoffen und Nanokunststoffen unter Verwendung der Erkennungssignale aus der Vielzahl von Erkennungsvorrichtungen (101a, 101b, 101c) bereitzustellen, um genaue lokale Messungen bereitzustellen.

9. System (100) nach einem der vorhergehenden Ansprüche, wobei der Prozessor (105) ausgebildet ist, quantitative Informationen, insbesondere Masse-pro-Volumen und/oder Kunststoffgrößenverteilungsinformationen, über die Kunststoffe (301a), die Makrokunststoffe (301b), die Mikrokunststoffe (301c) und die Nanokunststoffe (301d) anhand der empfangenen Erkennungssignale bereitzustellen.

10. System (100) nach einem der vorhergehenden Ansprüche, wobei der Prozessor (105) ausgebildet ist, ein Klassifizierungsverfahren zu verwenden, das implementiert ist, um eine Klassifizierung von Kunststoff-, Makrokunststoff-, Mikrokunststoff- und Nanokunststoffarten unter Verwendung von Multiplexfarben, insbesondere im Bereich von UV über sichtbar bis Infrarot, der Verwendung von Spektroskopie und/oder der Verwendung von Fluoreszenz zur Erkennung und Klassifizierung in der Umgebung bereitzustellen.

11. System (100) nach einem der vorhergehenden Ansprüche, wobei der Prozessor (105) ausgebildet ist, die empfangenen Erkennungssignale in Verbindung mit einem integrierten GPS-Positionssignal, einem Lagesteuersignal und/oder einem Laserentfernungssuchsignal zu verwenden, um Geolokalisierungsinformationen der Kunststoffe (301a), der Makrokunststoffe (301b), der Mikrokunststoffe (301c) und der Nanokunststoffe (301d) in der Umgebung bereitzustellen.

12. System (100) nach einem der vorhergehenden Ansprüche, wobei der Prozessor (105) ausgebildet ist, einen Hinweis auf eine vertikale Verteilung der Kunststoffe (301a), der Makrokunststoffe (301b), der Mikrokunststoffe (301c) und der Nanokunststoffe (301d) in der Umgebung bereitzustellen, wobei mindestens eine der Vielzahl von Erkennungsvorrichtungen (101a, 101b, 101c) ausgebildet ist, Wellenlängen zu verwenden, die eine Wassersäule unter Verwendung von Multiplex-Farben durchdringen, insbesondere im Bereich von UV über sichtbar bis Infrarot.

13. System (100) nach einem der vorhergehenden Ansprüche, wobei der Prozessor (105) ausgebildet ist, eine chemische Zusammensetzung und/oder Größenverteilung spezifischer Kunststoffe, Makrokunststoffe, Mikrokunststoffe und Nanokunststoffe unter Verwendung von Multiplexfarben, insbesondere im Bereich von UV über sichtbar bis Infrarot, der Anwendung von Spektroskopie, der Anwendung von Fluoreszenz, der Anwendung von kollimiertem Laserlicht bis 1mrad und/oder der Anwendung hoher Entfernungsauflösungen im Millimeter- und Zentimeterbereich zu identifizieren.

14. System (100) nach einem der vorhergehenden Ansprüche, wobei der Prozessor (105) ausgebildet ist, Nanokunststoffe (301d) zu erkennen und zu klassifizieren, einschließlich Kunststoffe, die in Partikel kleiner als 1 Mikrometer zerlegt sind, wobei mindestens eine der Vielzahl von Erkennungsvorrichtungen (101a, 101b, 101c) ausgebildet ist, ein Licht mit Wellenlängen kleiner als 1 Mikrometer, insbesondere 300 nm, das eine Wechselwirkung mit extrem kleinen Partikeln durch Rayleigh-Streuung und/oder andere optische Effekte wie Fluoreszenz und Raman-Streuung ermöglicht, zu verwenden.

15. System (100) nach einem der vorhergehenden Ansprüche, wobei der Prozessor (105) ausgebildet ist, Mikrokunststoffe (301c) zu erkennen und zu klassifizieren und mit Kunststoffen mit Partikelgrößen im Mikrometer- bis Millimeterbereich zu arbeiten, wobei mindestens eine der Vielzahl von Erkennungsvorrichtungen (101a, 101b, 101c) ausgebildet ist, Licht im Mikrometerbereich zu verwenden, das eine Erkennung von Kunststoffen durch räumliche Resonanz und/oder durch halbspiegelnde Reflexion bereitstellt.

16. System (100) nach einem der vorhergehenden Ansprüche, wobei der Prozessor (105) ausgebildet ist, Makrokunststoffe (301b) zu erkennen und zu klassifizieren und mit Kunststoffen mit Größen größer als Millimeter bis hin zu großen Kunststoffobjekten zu arbeiten, wobei mindestens eine der Vielzahl von Erkennungsvorrichtungen (101a, 101b, 101c) ausgebildet ist, spiegelnde Reflexion und Diffusion der Lichtstreuung von den identifizierten Makrokunststoffen (301b) zu verwenden.

17. System (100) nach einem der vorhergehenden Ansprüche, wobei der Prozessor (105) ausgebildet ist, zwischen Kunststoffen und Naturphänomenen, insbesondere Wellen, natürlichen Algen, Fischen und Organismen, natürlich vorkommenden Kohlenwasserstoffen und Öl, und/oder Luftblasen zu unterscheiden, wobei das System (100) in verschiedenen Meereszuständen und natürlichen Gewässern betreibbar ist, wobei der Prozessor (105) ausgebildet ist, Reflexionen von einer Wasseroberfläche unter Verwendung von Hochleistungscodes mit geringen Nebenkeulen und/oder einer hohen räumlichen Präzision, insbesondere bis 10 cm, zu isolieren, welche im Betrieb des Systems (100) ermöglicht sind.

18. System (100) nach einem der vorhergehenden Ansprüche, wobei der Prozessor (105) ausgebildet ist, zusätzliche Daten von Kamerasensoren, Radaren oder hochauflösenden Radaren, akustischen Sensoren oder Sonaren, andere Daten, welche durch Signalverarbeitung und Objekterkennung bereitgestellt werden, und von optischen Sensoren, zusammen mit Datenfusion mit Daten von einer Laser-/Licht-Erkennungs- und Entfernungsmessvorrichtung, zu verwenden.

19. System (100) nach einem der vorhergehenden Ansprüche, wobei die Kommunikationsschnittstelle (104) ausgebildet ist, Daten in-situ von chemischen Sensoren zu empfangen, wobei der Prozessor (105) ausgebildet ist, eine geolokalisierungsbasierte Verarbeitung zu verwenden.

20. System (100) nach einem der vorhergehenden Ansprüche, wobei der Prozessor (105) ausgebildet ist, durch Fusion von Laser/Lichterkennungs- und Entfernungsmessvorrichtungen-Datenmessung an einer Vielzahl von Standorten und einer Vielzahl von Zeitstandorten mit historischen/NOWcast/FORECAST-Modellen mit Meeresströmungsmodellen, Wellenmodellen und/oder Windmodellen, insbesondere Meta-Ozeanmodellen, zu arbeiten und Eingaben von diesen zu empfangen, um eine präzise Standorterkennung von Kunststoffen nach einem Zeitraum zu ermöglichen.

21. System (100) nach einem der vorhergehenden Ansprüche, wobei das System (100) in einer Konfiguration betreibbar ist, die auf einer Vielzahl von Plattformen, Schiffen, Unterwasserschiffen, Flugzeugen, Drohnen und autonomen Schiffen/Flugzeugen, u.a., unter Verwendung seiner modularen und flexiblen Konstruktion, durch seine kleine und kompakte Größe, mit seiner Elektronik von kleiner Größe, seinem geringen Stromverbrauch, Lichtzuführung durch flexible Glasfasern zu Öffnungen im Rumpf, und den Konfigurationen zur Verwendung seines enthaltenen GPS und Trägheitsnavigationssystems (INS) und eines Laserstrahls mit 1 Milliradian oder mehr entsprechend den Konfigurationen des Benutzers verwendet, montiert und/oder angeordnet werden kann.

22. System (100) nach einem der vorhergehenden Ansprüche, wobei das System (100) in einer Konfiguration betreibbar ist, die bestimmte Bereiche in der Umgebung untersuchen kann, um detaillierte Daten bereitzustellen, und sich auf stationären/schwebenden Plattformen befinden kann, die die Auflösung und Empfindlichkeit durch adaptive Verarbeitung und unterstützt durch präzise Navigationstools erhöhen können, insbesondere GPS, wenn sich ein Ladar über Wasser befindet, oder ein anderes präzises Navigationssystem, wenn sich ein Ladar unter Wasser befindet.

23. System (100) nach einem der vorhergehenden Ansprüche, wobei das System (100) in einer Konfiguration betreibbar ist, in der ein Ladar/Lidar-Sensor durch andere Sensoren ergänzt wird, und wobei die Sensoren ein Kit/eine Blackbox bilden, die in der Lage ist, einen Footprint eines bestimmten geografischen Gebiets zu überwachen, und wobei der Footprint durch Scannen um die Sensoren herum um 360 Grad erweitert werden kann und der Footprint in einem Kreis herumlaufen und diesen spezifischen geografischen Bereich scannen kann.

24. System (100) nach einem der vorhergehenden Ansprüche, wobei das System (100) in einer Konfiguration betreibbar ist, in der es mehr Kits/Blackboxen gibt, die einen ähnlichen Footprint haben, so dass eine Vielzahl von Scan-Einheiten in einer Linie oder an einem Gitter ausgerichtet und mit Glasfaser an ein Kommunikationsnetzwerk angeschlossen werden können, und wobei jede der Einheiten ausgebildet ist, entweder in einem dedizierten Footprint zu scannen, oder jede der Einheiten ausgebildet ist, um den jeweiligen Sensor kreisförmig herum zu scannen, um einen größeren Bereich des Scannens abzudecken, wenn mehr Scan-Einheiten verwendet werden.

25. System (100) nach einem der vorhergehenden Ansprüche, wobei das System (100) in einer Konfiguration betreibbar ist, bei der eine Blackbox/ein Kit mit einem Sensor entweder an einem Fixpunkt, insbesondere einer Boje oder einer Plattform, oder an einem fahrenden Fahrzeug, insbesondere einem Schiff, mit einem Driftmodell verknüpft wird, um die Trajektorie des Kunststoffs im Laufe von Tagen, Wochen und/oder Monaten unter Berücksichtigung von Windfetchfaktoren, Welleninteraktion und/oder Meeresströmungen zu bestimmen, und um zu bestimmen wo sich der endgültige geografische Standort des Kunststoffs über den Zeitraum befindet.

26. System (100) nach einem der vorhergehenden Ansprüche, wobei das System (100) ausgebildet ist, durch automatisches und manuelles Feedback selbstlernend zu sein, um genaue Informationen bereitzustellen, und Verfahren der künstlichen Intelligenz (KI) zum Selbstlernen und zur Selbstoptimierung umfassen kann, wie bei der Identifizierung und Überprüfung eines Objekts durch Korrelationstechniken zu Mustern, geostrukturellen Informationen, chemischen Informationen, u.a., wobei diese Informationen in den selbstlernenden Algorithmus integriert und mit den Rücksignalen zur Kunststofferkennung und Identifizierung verwendet werden können.

27. System (100) nach einem der vorhergehenden Ansprüche, wobei das System (100) modular und konfigurierbar ist, um sich an Benutzerbedürfnisse anzupassen, insbesondere Installationen aufweist, in denen Elektronik und Sensoren an unterschiedlichen Orten angeordnet sind, getrennt durch Fasern bis zu 500 m für kurze Distanzen und bis zu mehreren Kilometern für lange Distanzen, mechanische Implementierung, Mikroelektronik, Glasfaser, systembezogene Kosten, softwarebasiertes Design, Software-Fernsteuerung und/oder offene Schnittstellen.

28. System (100) nach einem der vorhergehenden Ansprüche, wobei das System (100) für die Augen des Benutzers und die Personen in seiner Nähe sicher ist und Sicherheit vor hoher optischer Beleuchtungsstärke bietet, wodurch es sicher unter verschiedenen Bedingungen mit programmierbarer Laserleistung, kontrollierter Laserstrahldivergenz, Tag- und Nachtbetriebsmodi und/oder einer wählbaren Wellenlänge, die eine Augensicherheitswellenlänge umfasst, verwendet werden kann.

29. Verfahren (200) zum Betreiben eines Systems (100) zum Erkennen von Kunststoffen (301a) in einer maritimen, Mündungs- oder Flussumgebung, **dadurch gekennzeichnet, dass** das System ferner zum Erkennen von Makrokunststoffen (301b), Mikrokunststoffen (301c) und Nanokunststoffen (301d) verwendet wird und dass das System (100) eine Vielzahl von Erkennungsvorrichtungen (101a, 101b, 101c) und eine Datenverarbeitungsvorrichtung (103) mit einer Kommunikationsschnittstelle (104) und einem Prozessor (105) umfasst, wobei die Erkennungsvorrichtungen (101a, 101b, 101c) zur Erkennung unter Verwendung unterschiedlicher Erkennungswellenlängen ausgebildet sind, wobei das Verfahren (200) die Schritte
eines Erkennens (201) der Kunststoffe (301a), der Makrokunststoffe (301b), der Mikrokunststoffe (301c) und der Nanokunststoffe (301d) durch die Mehrzahl von Erkennungsvorrichtungen (101a, 101b, 101c) in der Umgebung;
eines Empfangens (203) von Erkennungssignalen von der Vielzahl von Erkennungsvorrichtungen (101a, 101b, 101c) durch die Kommunikationsschnittstelle (104); und
eines Bestimmens (205) von Orten der Kunststoffe (301a), der Makrokunststoffe (301b), der Mikrokunststoffe (301c) und der Nanokunststoffe (301d) in der Umgebung durch den Prozessor (105) auf der Grundlage der empfangenen Erkennungssignale innerhalb eines gemeinsamen Koordinatensystems umfasst.

30. Computerprogramm zum Durchführen des Verfahrens (200) nach Anspruch 29, wenn es von einem System (100) ausgeführt wird, insbesondere um relevante Informationen bereitzustellen, einschließlich Ort, Charakterisierung und Identifizierung der detektierten Kunststoffe.

## Revendications

1. Système (100) de détection de plastiques (301a) dans un environnement maritime, estuarien ou fluvial, **caractérisé en ce que** le système est utilisé en outre pour détecter des macroplastiques (301b), des microplastiques (301c) et des nanoplastiques (301d) et **en ce que** le système (100) comprend :
une pluralité de dispositifs de détection (101a, 101b, 101c) pour détecter les plastiques (301a), macroplastiques (301b), microplastiques (301c) et nanoplastiques (301d) dans l'environnement, les dispositifs de détection (101a, 101b, 101c) étant configurés pour réaliser une détection à l'aide de différentes longueurs d'onde de détection ; et
un dispositif de traitement de données (103), comprenant une interface de communication (104) et un processeur (105), l'interface de communication (104) étant configurée pour recevoir des signaux de détection à partir de la pluralité de dispositifs de détection (101a, 101b, 101c), et le processeur (105) étant configuré pour déterminer des emplacements des plastiques (301a), macroplastiques (301b), microplastiques (301c) et nanoplastiques (301d) dans l'environnement en fonction des signaux de détection reçus dans un système de coordonnées commun.

2. Système (100) selon la revendication 1, dans lequel les différentes longueurs d'onde de détection sont utilisées pour évaluer une diffusion élastique et/ou non élastique d'une lumière visible et/ou invisible, dans lequel le processeur (105) est configuré pour réaliser au moins un procédé de traitement de données, en particulier un procédé de traitement en temps réel et/ou un procédé de traitement par intelligence artificielle, et dans lequel la pluralité de dispositifs de détection (101a, 101b, 101c) comprend des circuits électroniques micro-intégrés, des diodes laser, des fibres optiques pour l'amenée de la lumière et/ou un agencement de composants distribué.

3. Système (100) selon l'une quelconque des revendications précédentes, le système (100) étant configuré pour fournir des informations de distribution spatiale de plastiques, macroplastiques, microplastiques et nanoplastiques dans l'environnement par mappage spatial à l'aide d'un balayage et/ou de mesures spatiales et/ou de mesures temporelles avec des entrées d'observation in situ dans des modèles de circulation, et dans lequel le processeur (105) est configuré pour valider des observations de satellites.

4. Système (100) selon l'une quelconque des revendications précédentes, le système (100) étant configuré pour utiliser en tant que dispositif de la pluralité de dispositifs de détection, un dispositif de télédétection par laser/lumière multispectral pour une détection sélective de plastiques et une classification de types de plastiques.

5. Système (100) selon l'une quelconque des revendications précédentes, le système (100) étant configuré pour utiliser de multiples longueurs d'onde simultanées et/séquentielles pour une détection et une classification optimales, en particulier un faisceau laser bleu-vert pour la détection de microplastiques, un faisceau laser vert pour la détection de macroplastiques et/ou un faisceau laser rouge pour la détection de plastiques ou d'objets.

6. Système (100) selon l'une quelconque des revendications précédentes, le système (100) étant configuré pour utiliser un faisceau UV pour la détection de substances nanoplastiques et/ou organiques, le système (100) étant configuré pour évaluer une diffusion élastique afin de fournir des signatures spécifiques de substances, en particulier en évaluant la fluorescence pour détecter et différencier les matières organiques.

7. Système (100) selon l'une quelconque des revendications précédentes, dans lequel au moins un dispositif de la pluralité de dispositifs de détection (101a, 101b, 101c) est configuré pour générer un faisceau laser/lumineux multispectral pour pénétrer dans une surface d'eau dans l'environnement et obtenir une image 2D de haute sensibilité et/ou une image 3D de haute résolution.

8. Système (100) selon l'une quelconque des revendications précédentes, dans lequel le processeur (105) est configuré pour fournir des informations de points chauds spatiaux de plastiques, macroplastiques, microplastiques et nanoplastiques à l'aide des signaux de détection provenant de la pluralité de dispositifs de détection(101a, 101b, 101c) afin de fournir des mesures locales précises.

9. Système (100) selon l'une quelconque des revendications précédentes, dans lequel le processeur (105) est configuré pour fournir des informations quantitatives, en particulier des informations de masse par volume et/ou de répartition par taille de plastiques, sur les plastiques (301a), macroplastiques (301b), microplastiques (301c) et nanoplastiques (301d) en fonction des signaux de détection reçus.

10. Système (100) selon l'une quelconque des revendications précédentes, dans lequel le processeur (105) est configuré pour utiliser un procédé de classification mis en œuvre pour fournir une classification de types de plastiques, macroplastiques, microplastiques et nanoplastiques en utilisant des couleurs multiplexées, en particulier dans la plage de l'UV à l'infrarouge, en passant par la lumière visible, la spectroscopie et/ou la fluorescence pour la détection et la classification dans l'environnement.

11. Système (100) selon l'une quelconque des revendications précédentes, dans lequel le processeur (105) est configuré pour utiliser les signaux de détection reçus conjointement avec un signal de position GPS intégré, un signal de commande d'assiette, et/ou un signal de télémétrie laser, afin de fournir des informations de géopositionnement des plastiques (301a), macroplastiques (301b), microplastiques(301c) et nanoplastiques (301d) dans l'environnement.

12. Système (100) selon l'une quelconque des revendications précédentes, dans lequel le processeur (105) est configuré pour fournir une indication d'une distribution verticale des plastiques (301a), macroplastiques (301b), microplastiques (301c) et nanoplastiques (301d) dans l'environnement, dans lequel au moins un dispositif de la pluralité de dispositifs de détection (101a, 101b, 101c) est configuré pour utiliser des longueurs d'onde qui pénètrent dans une colonne d'eau en utilisant des couleurs multiplexées, en particulier dans la plage de l'UV à l'infrarouge en passant par la lumière visible

13. Système (100) selon l'une quelconque des revendications précédentes, dans lequel le processeur (105) est configuré pour identifier une composition chimique et/ou répartition de taille de plastiques, macroplastiques, microplastiques et nanoplastiques spécifiques en utilisant des couleurs multiplexées, en particulier dans la plage de l'UV à l'infrarouge, en passant par la lumière visible, la spectroscopie, la fluorescence, la lumière laser collimatée à 1 mrad et/ou une haute résolution de distance à l'échelle millimétrique ou centimétrique.

14. Système (100) selon l'une quelconque des revendications précédentes, dans lequel le processeur (105) est configuré pour détecter et classifier des nanoplastiques (301d), y compris des plastiques décomposés à des particules inférieures au micromètre, dans lequel au moins un dispositif de la pluralité de dispositifs de détection(101a, 101b, 101c) est configuré pour utiliser une lumière à des longueurs d'onde inférieures au micromètre, en particulier 300 nm, laquelle permet une interaction avec des particules extrêmement petites par diffusion de Rayleigh et/ou d'autres effets optiques tels que la fluorescence et la diffusion de Raman.

15. Système (100) selon l'une quelconque des revendications précédentes, dans lequel le processeur (105) est configuré pour détecter et classifier des microplastiques (301c) et travailler avec des plastiques d'une grosseur de particule dans la plage micrométrique à millimétrique, dans lequel au moins un dispositif de la pluralité de dispositifs de détection (101a, 101b, 101c) est configuré pour utiliser une lumière d'échelle micrométrique qui permet la détection de plastiques par résonance spatiale et/ou par réflexion semi-spéculaire.

16. Système (100) selon l'une quelconque des revendications précédentes, dans lequel le processeur (105) est configuré pour détecter et classifier des macroplastiques (301b) et travailler avec des plastiques de grosseurs supérieures à l'échelle millimétrique jusqu'à des objets plastiques de grande taille, dans lequel au moins un dispositif de la pluralité de dispositifs de détection (101a, 101b, 101c) est configuré pour utiliser la réflexion spéculaire et la diffusion de la lumière par les macroplastiques identifiés (301b).

17. Système (100) selon l'une quelconque des revendications précédentes, dans lequel le processeur (105) est configuré pour différencier les plastiques et phénomènes naturels, en particulier les vagues, les algues naturelles, les poissons et organismes, les hydrocarbures et pétrole se produisant naturellement, et/ou les bulles d'air, dans lequel le système (100) est exploitable dans différents états marins et eaux naturelles, dans lequel le professeur (105) est configuré pour isoler les réflexions par une surface d'eau en utilisant des codes de haute performance à lobes latéraux réduits et/ou une haute précision spatiale, en particulier jusqu'à 10cm, permettant le fonctionnement du système (100).

18. Système (100) selon l'une quelconque des revendications précédentes, dans lequel le processeur (105) est configuré pour utiliser des données supplémentaires provenant de capteurs de caméra, radars ou radars de haute résolution, capteurs acoustiques ou sonars, d'autres données fournies par traitement de signaux et détection d'objets provenant de capteurs optiques, ainsi qu'une fusion de données avec des données provenant d'un dispositif de télédétection par laser/lumière.

19. Système (100) selon l'une quelconque des revendications précédentes, dans lequel l'interface de communication (104) est configurée pour recevoir des données in situ à partir de capteurs chimiques, dans lequel le processeur (105) est configuré pour utiliser un traitement basé sur le géopositionnement.

20. Système (100) selon l'une quelconque des revendications précédentes, dans lequel le processeur (105) est configuré pour fonctionner avec des modèles de courants océaniques, modèles de vagues et/ou modèles de vents et recevoir des entrées de ceux-ci en particulier des modèles Métocéan, en fusionnant des mesures de données de dispositifs de télédétection par laser/lumière à plusieurs emplacements et plusieurs instants avec des modèles historiques/de prévision immédiate/prévision future, pour permettre une détection d'emplacements précis des plastiques après une période de temps.

21. Système (100) selon l'une quelconque des revendications précédentes, le système (100) étant exploitable dans une configuration pouvant être utilisée, montée, et placée sur une variété de plates-formes, vaisseaux, vaisseaux submergés, aéronefs, drones et vaisseaux/aéronefs autonomes, entre autres, tirant parti de sa construction modulaire et flexible, sa taille petite et compacte, son électronique de petite taille, sa faible consommation d'énergie, son alimentation de lumière par des fibres optiques flexibles à travers des ouvertures dans le fuselage et des configurations permettant d'utiliser son système de navigation inertielle (INS) et GPS inclus et un faisceau laser à 1 milliradian ou plus selon les configurations d'utilisateur.

22. Système (100) selon l'une quelconque des revendications précédentes, le système (100) étant exploitable dans une configuration pouvant rechercher des zones spécifiques dans l'environnement pour fournir des données détaillées et pouvant être placée sur des plates-formes stationnaires/à vol stationnaire qui peuvent augmenter la résolution et la sensibilité à l'aide d'un traitement adaptatif et prises en charge par des outils de navigation précis, en particulier GPS quand un Ladar est situé au-dessus de l'eau, ou un autre système de navigation précis quant un Ladar est situé en dessous de l'eau.

23. Système (100) selon l'une quelconque des revendications précédentes, le système (100) étant exploitable dans une configuration dans laquelle un capteur Ladar/Lidar est complété par d'autres capteurs et dans lequel les capteurs forment un kit/une boîte noire capable de surveiller une empreinte d'une certaine zone géographique, et dans lequel l'empreinte peut être étendue par un balayage sur 360 degrés autour des capteurs, et l'empreinte peut balayer cette zone géographique spécifique suivant un cercle.

24. Système (100) selon l'une quelconque des revendications précédentes, le système (100) étant exploitable dans une configuration comptant plusieurs kits/boîtes noires ayant une même empreinte, de telle sorte qu'une pluralité d'unités de balayage puisse être alignée en ligne ou réseau, connectée par fibres optiques à un réseau de communication, et que soit chacune des unités soit configurée pour balayer dans une empreinte dédiée, soit chacune des unités soit configurée pour balayer en cercle autour du capteur respectif, afin de couvrir une plus grande zone de balayage quand plusieurs unités de balayage sont utilisées.

25. Système (100) selon l'une quelconque des revendications précédentes, le système (100) étant exploitable dans une configuration dans laquelle une boîte noire/un kit doté d'un capteur, soit sur un point fixe, en particulier une bouée ou une plate-forme, soit sur un véhicule en déplacement, en particulier un vaisseau, est relié à un modèle de dérive, de manière à déterminer les trajectoires du plastique en termes de jours, semaines et/ou mois, tout en tenant compte des facteurs de fetch, interaction des vagues et/ou courants océaniques, et à déterminer l'emplacement géographique final du plastique au terme de la période de temps.

26. Système (100) selon l'une quelconque des revendications précédentes, dans lequel le système (100) est configuré pour un auto-apprentissage par un retour d'informations automatique et manuel afin de fournir des informations précises et peut inclure des procédés d'intelligence artificielle (AI) d'auto-apprentissage et d'auto-optimisation comme lorsqu'un objet est identifié et vérifié par des techniques de corrélation avec des tendances, des informations géostructurelles, des informations chimiques entre autres, ces informations pouvant être intégrées dans l'algorithme d'auto-apprentissage et utilisées avec les signaux renvoyés pour la détection et l'identification des plastiques.

27. Système (100) selon l'une quelconque des revendications précédentes, le système (100) étant modulaire et configurable pour l'adapter aux besoins de l'utilisateur, en termes en particulier d'installations où les circuits électroniques et capteurs sont disposés à différents endroits, séparés par des longueurs de fibres de jusqu'à 500 m pour les courtes distances et jusqu'à plusieurs kilomètres pour les longues distances, de coûts de mise en œuvre mécanique, micro-électronique, et fibres optiques liés au système, de conception logicielle, de télécommande logicielle, et/ou d'interfaces ouvertes.

28. Système (100) selon l'une quelconque des revendications précédentes, le système (100) étant inoffensif pour la vue de l'utilisateur et les personnes à sa proximité et fournissant une sécurité contre les fortes puissances optiques illuminantes, en faisant dans différentes conditions un système d'une utilisation sûre offrant puissance laser programmable, divergence de faisceau laser contrôlé, mode de fonctionnement diurne et nocturne, et/ou longueurs d'onde sélectionnables dont une longueur d'onde sans danger pour la vue.

29. Procédé (200) d'exploitation d'un système (100) de détection de plastiques (301a) dans un environnement maritime, estuarien ou fluvial, **caractérisé en ce que** le système est utilisé en outre pour détecter des macroplastiques (301b), microplastiques (301c) et nanoplastiques (301d) et **en ce que** le système (100) comprend une pluralité de dispositifs de détection (101a, 101b, 101c) et un dispositif de traitement de données (103) comprenant une interface de communication (104) et un processeur (105), les dispositifs de détection (101a, 101b, 101c) étant configurés pour réaliser une détection à l'aide de différentes longueurs d'onde de détection, le procédé (200) comprenant les étapes de détection (201), par la pluralité de dispositifs de détection (101a, 101b, 101c), des plastiques (301a),macroplastiques (301b), microplastiques (301c) et nanoplastiques (301d) dans l'environnement;
réception (203), par l'interface de communication (104), de signaux de détection provenant de la pluralité de dispositifs de détection (101a, 101b, 101c) ; et
détermination (205), par le processeur (105), d'emplacements des plastiques (301a), macroplastiques (301b), microplastiques (301c) et nanoplastiques (301d) dans l'environnement en fonction des signaux de détection reçus dans un système de coordonnées commun.

30. Programme informatique permettant de réaliser le procédé (200) selon la revendication 29 lorsqu'il est exécuté par un système (100), en particulier permettant de fournir des informations pertinentes, dont un emplacement, une caractérisation et une identification des plastiques détectés
